# EUROPÄISCHE PATENTANMELDUNG

(11) **EP 1 262 637 A1**
(43) Veröffentlichungstag der Anmeldung: **04.12.2002**
(21) Anmeldenummer: 02405346.4
(22) Anmeldetag: 29.04.2002
(51) Int. Cl.: F01D 25/30, F02C 6/00

(54) **Verfahren zum Betrieben eines Gasturbinenkraftwerks sowie Gasturbinenkraftwerk**

(30) Priorität: 31.05.2001 CH 10022001
(71) Anmelder: ALSTOM (Switzerland) Ltd, 5401 Baden (CH)
(72) Erfinder: Dr. Braun, Jost, 79761 Waldshut-Tiengen (DE)

(57) **Zusammenfassung**

Beschrieben wird ein Verfahren zum Betreiben eines Gasturbinenkraftwerks mit einer Gasturbinenanlage (1), in der ein sauerstoffhaltiges Gas angesaugt, verdichtet und zur Verbrennung gebracht wird und nach Durchtritt durch eine Turbinenstufe als austretendes Heissgas (8) einem Abhitzekessel (4) zugeführt wird, aus dem das gekühlte Abgas (9) einem Auslass (10) und danach der freien Atmosphäre zugeführt wird. Die Erfindung zeichnet sich dadurch aus, dass im Bereich des Auslasses (10) eine gezielte Verminderung der Strömungsgeschwindigkeit, mit der das Abgas (9) den Auslass (10) durchströmt, bei gleichzeitigem Druckanstieg stromab im Auslass (10) vorgenommen wird, und dass die sich innerhalb des Auslasses (10) einstellenden Druckverhältnisse verlustfrei über einen gasdichten Strömungsweg der Heissund Abgase (8;9) zwischen der Gasturbine (1) und dem Auslass (10) übertragen werden.

## Beschreibung

### Technisches Gebiet

Die Erfindung bezieht sich auf Verfahren zum Betreiben eines Gasturbinenkraftwerks, im wesentlichen umfassend eine Einrichtung zum Verdichten eines sauerstoffhaltigen Gases, mindestens eine Brennkammer zum Erhitzen des verdichteten Gases, mindestens eine Gasturbine, in der das erzeugte Heissgas arbeitsleistend entspannt wird, einen Strömungsweg, in dem das entspannte Heissgas, gegebenenfalls unter Absolvierung einer Reihe weiterer Arbeitsstufen zur energetischen und/oder stofflichen Verwertung, wie beispielsweise eines Abhitzekessels zur Dampferzeugung, einem Auslass in die Atmosphäre zugeführt wird.
Ferner bezieht sich die Erfindung auf ein entsprechendes Gasturbinenkraftwerk.

### Stand der Technik

Ein gattungsgemäßes Gasturbinenkraftwerk ist in der Druckschrift DE 199 05 818 A1 beschrieben, das eine ortsfeste Gasturbine mit einem offenen Kreislauf vorsieht, bei der atmosphärische Umluft angesaugt, verdichtet, mit Brennstoff vermischt und zur Zündung gebracht wird, und die dabei entstehenden Heissgase in einer Turbinenstufe expandieren und anschliessend in einen Abhitzekessel zur weiteren Verwertung der innewohnenden thermischen Energie geleitet werden.

Die Leistung eines Gasturbinenkraftwerks hängt in einem gewissen Grade auch von den Verlusten im Strömungsweg der Heissgase ab. Zum einen wird die Leistung durch Abgasdruckverluste in den nachgeschalteten Anlagen vermindert. Zum anderen treten die thermisch weitgehend verwerteten Abgase mit Strömungsgeschwindigkeiten von 10 m/s bis 30 m/s, also mit einem erheblichen Gehalt an kinetischer Energie, über den Kamin in die Atmosphäre aus.
Zur Steigerung des Gesamtwirkungsgrades des an sich bekannten Gasturbinenkraftwerkes wird in vorstehend genannter Druckschrift vorgeschlagen, die kinetische Energie des den Auslass des Abhitzekessels durchströmenden thermisch verwerteten Abgases nutzbar zu machen. Hierzu wird innerhalb des als Kamin ausgebildeten Auslasses eine Strömungskraftmaschine vorgesehen, die in Art einer Turbine, wie sie bisweilen zur Windenergienutzung eingesetzt wird, ausgebildet ist. Eine derartige Strömungskraftmaschine weist Propeller- bzw. Turbinenrotoren auf, die bei Anströmung durch das Abgas innerhalb des Auslasses in Rotation versetzt werden. Zur Stromerzeugung ist die Rotorwelle einer derartigen Strömungskraftmaschine mit einem Generator verbunden, der analog einer Windkraftanlage angetrieben wird, so dass dem Verlust an Strömungsenergie entsprechend elektrische Energie gewonnen werden kann.

Ein Nachteil dieser bekannten Vorrichtung zur Nutzung der im Abgas innewohnenden kinetischen Energie ist die relativ hohe Komplexität der im Auslassbereich des Kamins vorgesehenen Strömungsmaschine, die zusätzlich einem hohen Wartungsaufwand und vergleichbar hohen Investitionskosten unterliegt. Typische Strömungsmaschinen für die innerhalb des Kamins vorhandenen Strömungsverhältnisse, mit Strömungsgeschwindigkeiten zwischen 10 m/s und 30 m/s weisen zudem im allgemeinen ein deutlich geringeres Arbeitspotential auf als die im Strömungsfluss vorgeschaltete Gasturbine, so dass auch die Energieumsetzung in einem tendentiell niedrigeren Effizienzgrad erfolgt, als dies in der vorgeschalteten Gasturbine möglich ist.

### Darstellung der Erfindung

In Weiterentwicklung des Standes der Technik liegt der Erfindung die Aufgabe zugrunde, den Gesamtdruckverlust im Strömungsweg des Abgases zwischen dem Austritt aus der Gasturbine und dem Eintritt in die Atmosphäre zu verringern, wobei die verminderten Strömungsverluste unmittelbar der Gasturbine als Mehrleistung zugute kommen sollen.

Erfindungsgemäss wird die Aufgabe durch ein Verfahren zum Betreiben eines Gasturbinenkraftwerks sowie durch ein Gasturbinenkraftwerk der in den unabhängigen Patentansprüchen genannten Art gelöst. Vorteilhafte Ausführungsarten dieser Erfindungen geben die abhängigen Ansprüche wieder.

Der Grundgedanke der Erfindungen besteht darin, die kinetische Energie des über einen Auslass in die Atmosphäre austretenden Abgases gezielt zur Erzeugung eines Unterdruckes innerhalb des Strömungswegs des Abgases zu nutzen und diesen Unterdruck über den gesamten Strömungsweg stromab der Gasturbine aufrechtzuerhalten, um auf diese Weise hinter der Turbine einen niedrigeren Gegendruck aufzubauen. Die Gasturbine muss auf diese Weise nicht - wie in herkömmlichen Anlagen üblich - gegen atmosphärischen oder sogar höheren Druck Arbeit verrichten. Die infolge dieser Massnahme an der Gasturbine zur Verfügung stehende höhere Druckdifferenz schlägt sich in einer erhöhten Leistungsausbeute und damit einem erhöhten Gesamtwirkungsgrad des Gasturbinenkraftwerks nieder.

Das erfindungsgemässe Verfahren zum Betreiben eines Gasturbinenkraftwerks, wobei ein sauerstoffhaltiges Gas angesaugt, verdichtet, unter Zumischung eines Brennstoffs erhitzt und das erzeugte Heissgas in einer Gasturbine arbeitsleistend entspannt wird, anschliessend aus der Gasturbine austritt und über einen Strömungsweg einem Auslass zugeführt wird, zeichnet sich erfindungsgemäss dadurch aus, dass die Heissgasströmung bei im wesentlichen konstantem Durchsatz im Bereich des Auslasses verzögert wird, und die dadurch bewirkten Druckverhältnisse stromauf des Bereiches der Verzögerung über den Strömungsweg der Heissgase bis zum Ausgang der Gasturbine zurückübertragen werden.

Ein zur Realisierung dieses Verfahrens ausgebildetes Gasturbinenkraftwerk ist im Bereich des in der Regel als Kamin ausgebildeten Auslasses mit einer Diffusoreinheit ausgerüstet, durch die das Abgas mittels einer gezielten Erweiterung des Strömungsquerschnitts in seiner Strömungsgeschwindigkeit verlustarm verzögert wird, wobei der im Bereich des verzögerten Abgases vorherrschende Druck ansteigt. Dies wiederum führt gegenüber dem Atmosphärendruck, der sich stromab an die Diffusoreinheit anschließt, zu einer erheblichen Druckminderung stromauf der Diffusoreinheit innerhalb des Auslasses. Indem zugleich der Strömungsweg zwischen dem Turbinenausgang und dem mit der Diffusoreinheit ausgerüsteten Auslass gasdicht gegenüber dem Umgebungsdruck ausgeführt ist, so vermag sich der stromauf zur Diffusoreinheit innerhalb des Auslasses einstellende reduzierte Druck bis hin zum Turbinenausgang auszubreiten. Damit arbeitet die Gasturbine gegen einen niedrigeren Gegendruck, wodurch der Wirkungsgrad der Gasturbine insofern gesteigert werden kann, da diese nicht wie bei üblichen offen ausgebildeten Gasturbinenanlagen gegen Atmosphärendruck arbeiten muss, sondern gegen ein im Vergleich zum Atmosphärendruck deutlich reduziertes Druckniveau.

Mit Hilfe geeigneter Diffusoreinheiten, die in den nachstehenden Ausführungsbeispielen unter Bezugnahme auf die Zeichnungen in einer nicht erschöpfenden Auswahl erläutert sind, ist ein energetischer Rückgewinnungswirkungsgrad aus der gezielten Abbremsung der Abgasgeschwindigkeit von über 70% zu erreichen.

Der ohnehin relativ hohe Gesamtwirkungsgrad eines an sich bekannten Gasturbinenkraftwerkes wird durch die erfindungsgemäße Maßnahme einer Ausnutzung der dem Abgasstrom innewohnenden kinetischen Energie weiter erhöht, wobei zur Realisierung des gesteigerten technischen Gesamtwirkungsgrades keine technisch komplexen, beweglichen und verschleissanfälligen Komponenten verwendet werden müssen, wie es beispielsweise bei einer im Abgaskanal installierten Strömungsmaschine der Fall ist.
Die Nutzung der kinetischen Energie kommt dabei unmittelbar der Stromerzeugung mit einem relativ hohen Wirkungsgrad zugute. Dabei erfordern die zu treffenden Maßnahmen geringe Investitionskosten. Der damit verbundene Wartungsaufwand ist ausserordentlich gering. Schliesslich verdient es Erwähnung, dass die erfindungsgemässen Vorkehrungen zur technischen Nutzung der im Abgas innewohnenden kinetischen Energie sowohl in neu zu errichtende, darüber hinaus aber auch mit einem äusserst geringen investiven Aufwand in bereits bestehende Anlagen integriert werden können.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierte Gesamtübersicht eines erfindungsgemäß ausgebildeten Gasturbinenkraftwerkes,
- Fig. 2: schematisierte Darstellung eines axialen Diffusors,
- Fig. 3: schematisierte Darstellung eines gewinkelt angeordneten axialen Diffusors,
- Fig. 4: schematisierte Darstellung eines radialen Diffusors,
- Fig. 5: schematisierte Darstellung eines halbaxialen Diffusors, sowie
- Fig. 6: schematisierte Darstellung des Auslasses als Gesamtdiffusor.

### Wege zur Ausführung der Erfindung, gewerbliche Verwendbarkeit

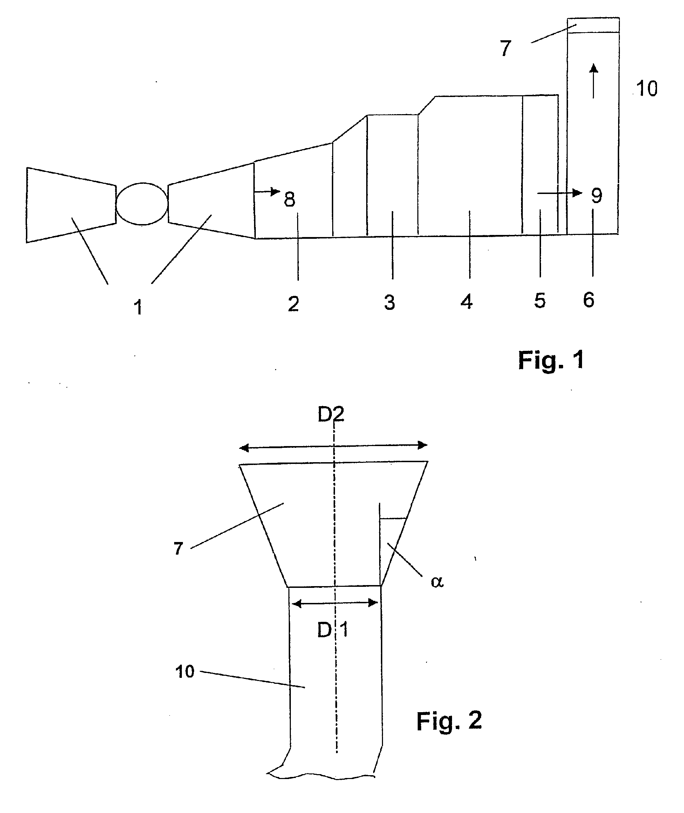

In Fig. 1 ist in stark schematisierter Weise ein Gasturbinenkraftwerk dargestellt, das in Art eines Kombikraftwerkes oder einer Cogenerationsanlage ausgebildet ist, das heisst, die die Gasturbine verlassenden Heissgase werden vor Entlassung in die Atmosphäre in einem Abhitzekessel thermisch verwertet.
Die stationär angeordnete Gasturbine 1 stößt aus ihrem stromabwärtigen Bereich Heissgase 8 aus, die bei modernen Anlagen Temperaturen von über die 600°C einnehmen können, welche Heissgase 8 durch nachgeschaltete Prozessstufen 2, 3 in einen Abhitzekessel 4 gelangen und dort einen Teil der innewohnenden thermischen Energie im Wege der indirekten Wärmeübertragung zum Zweck der Dampferzeugung abgeben. Der erzeugte Dampf speist eine Dampfturbine oder wird in einer anderen Art und Weise, die im hier in Frage stehenden Zusammenhang nicht von Interesse ist, verwertet.
Das thermisch weitgehend verwertete Abgas 9 gelangt nun über Übergangsstücke 5 und 6 in den Auslass 10, der als Kamin mit annähernd konstantem Strömungsquerschnitt längs seiner Erstreckung, ausgebildet ist. Als Abschluss ist der Kamin 10 erfindungsgemäß mit einem Diffusor 7 ausgerüstet, welcher eine gezielte Verzögerung der Strömungsgeschwindigkeit herbeiführt.

Allen nachstehend erläuterten Diffusoren 7 ist gemeinsam, dass sie keine beweglichen Teile aufweisen, wodurch sie einerseits technisch und finanziell günstig herstellbar und überdies keine oder nur geringe Wartungsarbeiten erfordern.

In Fig. 2 ist ein Längsschnitt durch einen unmittelbar in Strömungsrichtung an den Auslass 10 angebrachten Diffusor 7 dargestellt. Der Kamin 10 weist, wie bereits erwähnt, einen im wesentlichen gleichbleibenden Strömungsquerschnitt D1 auf, an den sich ein sich konisch auf einen Strömungsquerschnitt D2 erweiternder Strömungsabschnitt, ein sogenannter Axialdiffusor, anschließt. Der Axialdiffusor 7 besitzt einen Öffnungswinkel α, der den ursprünglichen Strömungsquerschnitt D1 kontinuierlich auf den Austrittsströmungsquerschnitt D2 aufweitet. Proportional der Strömungsquerschnittsvergrößerung wird die Strömungsgeschwindigkeit des Abgases 9 reduziert, wodurch sich der statische Druck innerhalb des axialen Diffusors 7 erhöht. Dies wiederum führt zu einer Druckreduzierung innerhalb des Strömungsbereiches im Auslass 10. Diese Wirkungen treten selbstverständlich nur unter der Voraussetzung ein, dass die Strömung nicht in einem nennenswerten Masse von der strömungsbegrenzenden Wand abreisst. Daher sollte der Öffnungswinkel α des Diffusors 7 einen Bereich von 5° bis 7° nicht überschreiten. Bei höheren Öffnungswinkeln nehmen die durch Wandabriss bedingten Strömungsverluste dermassen zu, dass der Diffusorwirkungsgrad auf ein Mass sinkt, das keinen signifikanten Druckrückgewinn mehr zulässt. Aufgrund der gasdichten Ausbildung des Strömungsweges zwischen dem Diffusor 7 und dem Ausgang der Gasturbine 1 werden die reduzierten Druckbedingungen nahezu verlustfrei über den Strömungsweg übertragen und in Form eines verminderten Gegendrucks am Ausgang der Turbine 1 wirksam.

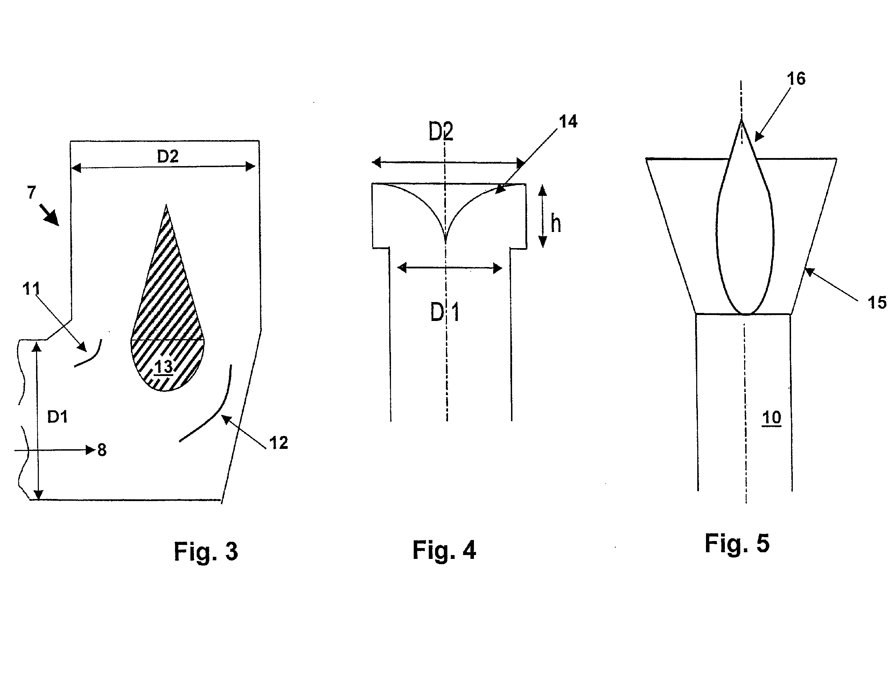

In Fig. 3 ist eine weitere Variante eines axialen Diffusors 7 dargestellt, bei der das entlang des Strömungswegs des Auslasses 10 strömende Abgas 9 um einen Winkel, hier 90°, mittels Umlenkblechen 11, 12 umgelenkt wird. Ferner ist im Bereich des umgelenkten Abgases 9 ein Verdrängungskörper 13 vorgesehen, dessen Raumform derart ausgebildet ist, dass diese in Verbindung mit der Kontur der strömungsbegrenzenden Wand des Auslasses 10 eine Querschnittserweiterung und damit eine verzögernde Wirkung auf die Strömungsgeschwindigkeit des Abgases 9 ausübt. Eine gleichzeitige Kopplung der Verzögerung mit einer verlustarmen Umlenkwirkung ist mit dieser Bauart möglich und anzustreben. Es versteht sich von selbst, dass auch bei dieser Bauart die Strömungsbedingungen in einer solchen Weise zu berücksichtigen sind, dass verlustbringender Strömungsabriss an der Wand weitgehend verhindert wird; die strömungsbegrenzenden Konturen des Verdrängungskörpers 13 und des Auslasses 10 also einen entsprechend niedrigen Öffnungswinkel zueinander einnehmen.

Durch die gewinkelte Ausführungsform des in Fig. 3 dargestellten axialen Diffusors 7 ist es möglich, den Diffusor 7 als kompakte Baueinheit in das Innere eines Kamins 10 zu integrieren, ohne seine Bauform und insbesondere sein äußeres Erscheinungsbild zu verändern. Diese Bauform eignet sich daher insbesondere für Neuanlagen.

In Fig. 4 ist ein radial wirkender Diffusor 7 dargestellt, der sich unmittelbar in Strömungsrichtung nach dem Auslass 10 anschließt. Der radiale Diffusor 7 weist eine stetige Strömungsquerschnittsvergrößerung von (D1)²π/4 auf (D2)πh auf und verfügt über die Abgasströmung in Radialrichtung ablenkende Ablenkflächen 14. Die Strömungsgeschwindigkeit des durch den radialen Diffusor 7 hindurchtretenden Abgases reduziert sich durch gezielte radiale Abströmung des Abgases entlang der Strömungsstrecke h des radialen Diffusors 7.

In Fig. 5 ist ein sogenannter halbaxialer Diffusor 7 dargestellt, der in Strömungsrichtung an den Auslass 10 einen sich trichterförmig erweiternden Strömungsabschnitt 15 vorsieht, in dem zentrisch ein Verdrängungskörper 16 eingebracht ist. Je nach geometrischer Ausführungsform des Verdrängungskörpers 16 vermag dieser, das den Strömungsabschnitt 15 durchströmende Abgas 9 sowohl in Axial- als auch in Radialrichtung zu verzögern.

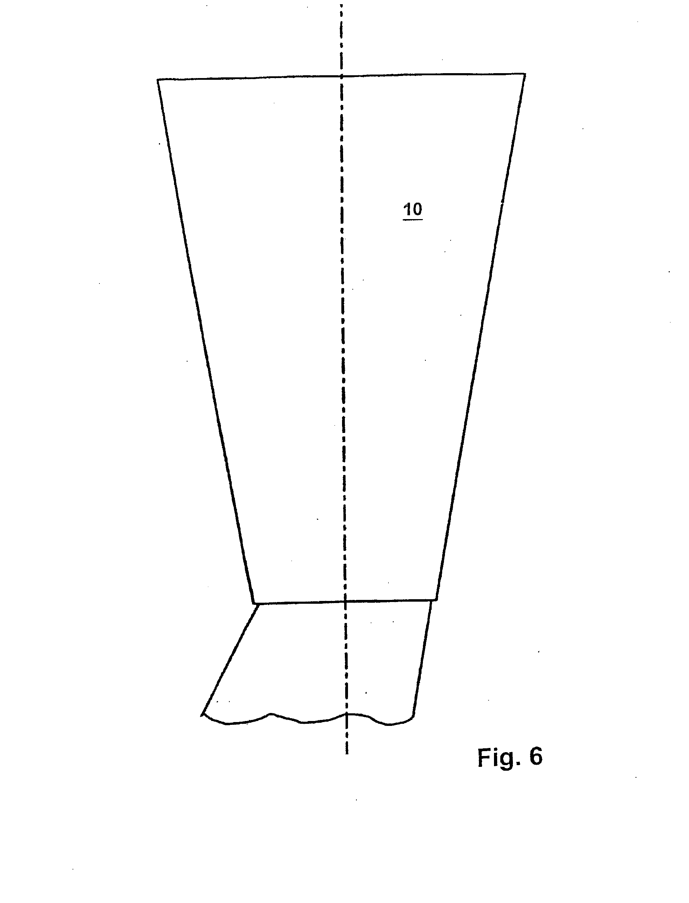

Schließlich geht aus Fig. 6 eine Ausführungsform einer Diffusoreinheit 7 hervor, die sich über die gesamte Länge des Kamins selbst erstreckt. Hier ist der Auslass bzw. Kamin 10 als ein in Strömungsrichtung sich erweiternder Körper 17 dargestellt, längs dessen Strömungsweg das Abgas kontinuierlich verzögert wird, indem der Strömungsquerschnitt kontinuierlich zunimmt.

Allen vorstehend beschriebenen Diffusoreinheiten liegt das strömungsdynamische Prinzip der gezielten Reduzierung der Strömungsgeschwindigkeit bei gleichzeitiger Erhöhung des statischen Druckes zugrunde, wobei sich stromauf zur Diffusoreinheit eine deutliche Druckreduzierung einstellt, die gezielt in den stromabwärtigen Bereich der Gasturbine übertragen wird, so dass der am Turbinenausgang anliegende Gegendruck vermindert wird und damit das verfügbare Druckpotential zwischen Turbineneinlass und -auslass erhöht wird.

### Bezugszeichenliste

- 1: Gasturbinenstufe
- 2: Diffusor der Gasturbine
- 3: Übergangsstück, Gasturbine, Abhitzekessel
- 4: Abhitzekessel
- 5, 6: Übergangsstück zum Auslass
- 7: Diffusoreinheit
- 8: Heissgas
- 9: Abgas
- 10: Auslass, Kamin
- 11, 12: Umlenkflächen
- 13: Verdrängungskörper
- 14: Ablenkflächen
- 15: Strömungsabschnitt
- 16: Verdrängungskörper
- 17: Kamin

## Patentansprüche

1. Verfahren zum Betreiben eines Gasturbinenkraftwerks, wobei ein sauerstoffhaltiges Gas angesaugt, verdichtet, unter Zumischung eines Brennstoffs erhitzt und das erzeugte Heissgas in einer Gasturbine (1) arbeitsleistend entspannt wird, anschliessend aus der Gasturbine (1) austritt und über einen Strömungsweg einem Auslass zugeführt wird, **dadurch gekennzeichnet, dass** die Abgasströmung bei im wesentlichen konstantem Durchsatz im Bereich des Auslasses (10) verzögert wird, und die dadurch bewirkten Druckverhältnisse stromauf des Bereiches der Verzögerung über den dort gasdicht zur Atmosphäre ausgeführten Strömungsweg bis zum Auslass der Gasturbine (1) zurückübertragen werden.

2. Verfahren nach Anspruch 1,
**dadurch gekennzeichnet, dass** die Verzögerung der Abgasströmung derart erfolgt, dass sich stromauf des Auslasses (10) ein Unterdruck gegenüber dem atmosphärischen Umgebungsdruck einstellt.

3. Gasturbinenkraftwerk, umfassend eine Einrichtung zum Verdichten eines sauerstoffhaltigen Gases, mindestens eine Brennkammer zum Erhitzen des verdichteten Gases, mindestens eine Gasturbine (1), in der das erzeugte Heissgas arbeitsleistend entspannt und anschliessend in einen Strömungsweg überführt wird, in dem es weitere Arbeitsstufen (2;3;4;5;6) zur energetischen und/oder stofflichen Verwertung durchläuft, um schliesslich über einen Auslass (10) in die Atmosphäre entlassen zu werden,
**dadurch gekennzeichnet, dass** der Strömungsweg zwischen dem Ausgang der Gasturbine(1) und dem Auslass (10) im wesentlichen gasdicht zur Atmosphäre hin ausgeführt ist und innerhalb des Auslasses (10) oder dem Auslass (10) in Strömungsrichtung nachgeordnet ein Diffusor (7) angeordnet ist.

4. Gasturbinenkraftwerk nach Anspruch 3,
**dadurch gekennzeichnet, dass** der Auslass (10) als Kamin ausgebildet ist mit einem weitgehend gleichbleibenden Strömungsquerschnitt, und der Diffusor (7) auf den Kamin aufgesetzt ist.

5. Gasturbinenkraftwerk nach Anspruch 4,
**dadurch gekennzeichnet, dass** der Diffusor (7) ein axialer Diffusor ist.

6. Gasturbinenkraftwerk nach Anspruch 3,
**dadurch gekennzeichnet, dass** im Bereich des Auslasses (10) ein wenigstens annähernd mittig in den Strömungsquerschnitt integrierter Verdrängungskörper (13) vorgesehen ist, der eine solche Raumform einnimmt, dass er in Wechselwirkung mit der strömungsbegrenzenden Wand eine Diffusorwirkung erzielt.

7. Gasturbinenkraftwerk nach Anspruch 6,
**dadurch gekennzeichnet, dass** der Strömungskörper (13) sich in Strömungsrichtung verjüngt und die strömungsbegrenzende Wand in diesem Bereich im wesentlichen zylindrisch verläuft.

8. Gasturbinenkraftwerk nach Anspruch 3,
**dadurch gekennzeichnet, dass** der Auslass (10) in Art eines Kamins ausgebildet ist mit einem weitgehend gleichbleibenden Strömungsquerschnitt, und der Diffusor (7) ein radialer Diffusor ist.

9. Gasturbinenkraftwerk nach Anspruch 8,
**dadurch gekennzeichnet, dass** der radiale Diffusor (7) einen dem Kamin (10) in Strömungsrichtung unmittelbar nachgeordneten Strömungsabschnitt mit einem größeren Strömungsquerschnitt (D2) aufweist, der innerhalb des Strömungsquerschnittes D2 stationäre das Abgas radial nach aussen ablenkende Strömungsflächen (14) aufweist.

10. Gasturbinenkraftwerk nach Anspruch 3,
**dadurch gekennzeichnet, dass** der Auslass (10) in Art eines Kamins ausgebildet ist mit einem weitgehend gleichbleibenden Strömungsquerschnitt, und der Diffusor (7) ein halbaxialer Diffusor ist.

11. Gasturbinenkraftwerk nach Anspruch 10,
**dadurch gekennzeichnet, dass** der halbaxiale Diffusor (7) einen mittig in den Strömungsquerschnitt integrierten Verdrängungskörper (16) aufweist, dessen Verdrängungskontur dergestalt der strömungsbegrenzenden Wand ähnlich verläuft, dass in Strömungsrichtung ein sich stetig erweiternder Strömungsquerschnitt entsteht.
